# EUROPÄISCHE PATENTSCHRIFT

(11) **EP 2 896 524 B1**
(45) Veröffentlichungstag und Bekanntmachung des Hinweises auf die Patenterteilung: **11.04.2018**
(21) Anmeldenummer: 14197990.6
(22) Anmeldetag: 15.12.2014
(51) Int. Cl.: B60H 1/00, G06F 3/0488, B60K 35/00, B60K 37/06

(54) **Benutzerschnittstelle zur Steuerung einer Klimaanlage eines Fortbewegungsmittels**
User interface for controlling an air-conditioning system of a means of locomotion
Interface utilisateur destinée à commander une climatisation d'un moyen de transport

(30) Priorität: 21.01.2014 DE 102014200992
(43) Veröffentlichungstag der Anmeldung: 22.07.2015
(73) Patentinhaber: Volkswagen Aktiengesellschaft, 38440 Wolfsburg (DE)
(72) Erfinder: Wild, Holger, 10179 Berlin (DE)

(56) Entgegenhaltungen:
- EP-A2- 1 518 725
- WO-A1-2014/195134
- DE-A1-102010 010 441
- DE-A1-102010 011 039

## Beschreibung

### Stand der Technik

Die vorliegende Erfindung betrifft Benutzerschnittstellen zur Steuerung einer Klimaanlage eines Fortbewegungsmittels. Insbesondere betrifft die vorliegende Erfindung ergonomische Verbesserungen bei der Verwendung einer berührungssensitiven Anzeigeeinrichtung zur Steuerung einer Klimaanlage bzw. einer Heizung durch einen Anwender in einem Fortbewegungsmittel.

Im Stand der Technik sind viele unterschiedliche Formen der Bedienung von Einstellungen einer Klimaanlage bzw. einer Heizung eines Fortbewegungsmittels (z.B. ein PKW) bekannt. Klassischerweise werden Schalter, Schaltwippen, elektrische und mechanische Stellelemente zur Beeinflussung von Luftverteilung, Lufttemperatur und Luftmenge verwendet. Mitunter werden auch automatische Regelungen angeboten, welche die Vorgaben eines Anwenders hinsichtlich einer Soll-Temperatur in der Fahrgastzelle realisieren.

DE 602 05 437 T2 offenbart ein Einstellungssystem einer Kraftfahrzeugklimaanlage, bei welchen auf einem berührungsempfindlichen Display ein Parameter zur Luftverteilung auf drei unterschiedliche Düsen mittels eines auf dem Display dargestellten Dreiecks eingestellt werden kann. Dabei stehen die drei Ecken des Dreiecks für einen jeweiligen Luftauslass. Je näher die Eingabe einer betrachteten Ecke ist, desto mehr Luft wird auf dem entsprechenden Luftauslass gelenkt.

DE 10 2008 046 625 B4 offenbart eine Bedieneinheit zur Einstellung der Temperatur und Luftverteilung in einem Fahrzeug, bei welcher eine Vielzahl rechtwinklig zueinander Einstell-Berührlinien verwendet werden, um die Temperatur bzw. die Luftmenge für eine jeweilige Körperregion des Anwenders einzustellen. Durch die horizontalen Einstell-Berührlinien wird die Luftmengeneinstellung, durch die vertikalen Einstell-Berührlinien die jeweilige Temperatureinstellung vorgenommen.

DE 10 2008 000 405 A1 offenbart eine Benutzerschnittstelle zur Einstellung von Parametern für eine Klimaanlage in Fahrzeugen. Die Benutzerschnittstelle weist ein dreidimensionales Koordinaten-Element auf, dessen drei Dimensionen den Parametern Temperatur, Luftverteilung und Luftmengeneinstellung zugeordnet sind. Die Eingabe der dritten Dimension erfolgt durch Variation eines Drucks auf dem Eingabeelement.

DE 10 2010 010 441 A1 offenbart eine Benutzerschnittstelle gemäß Oberbegriff des Anspruchs 1 zur Steuerung eines Belüftungs- und Klimasystems eines Kraftfahrzeugs, welches eine zweidimensionale berührungsempfindliche Anzeigeeinheit nach Art eines Touch-Screens aufweist. Zwischen Symbolen, welche die Luftausströmer bzw. Lüftungsklappen symbolisieren, und einem Sitzsymbol, welches die Anwenderposition repräsentiert, kann ein Anwender kurvenartige Berührungen zur Steuerung von Sollwerten für die Luftklappen sämtlicher Führungskanäle ausführen. In einem separaten Schaubild kann eine Lüfterstufe angepasst werden.

Die im Stand der Technik genannten Lösungen schöpfen die Möglichkeiten zur Realisierung bestmöglicher Ergonomie in nicht zufriedenstellen Maße aus. Es ist daher eine Aufgabe der vorliegenden Erfindung, den vorstehend aufgezeigten Bedarf zu stillen.

### Offenbarung der Erfindung

Die vorstehend genannte Aufgabe wir erfindungsgemäß durch eine Benutzerschnittstelle mit den Merkmalen gemäß Anspruch 1, sowie ein Fahrzeug mit den Merkmalen gemäß Anspruch 13 gelöst. Die erfindungsgemäße Benutzerschnittstelle dient zur Steuerung einer Klimaanlage eines Fortbewegungsmittels. Unter einer "Klimaanlage" seien im Rahmen der vorliegenden Erfindung nicht lediglich Einrichtungen zur Erzeugung kühler Luft, sondern auch sämtliche Einrichtungen zur Erhöhung der Wärmezufuhr ("Heizung") verstanden. Das Fortbewegungsmittel kann beispielsweise als Fahrzeug (PKW) ausgestaltet sein. Die Benutzerschnittstelle umfasst eine berührungssensitive Anzeigeeinrichtung, welche auch als "Touch-Screen" bezeichnet wird. Zudem ist eine Datenverarbeitungseinheit vorgesehen, welche eingerichtet ist, zur Steuerung der Klimaanlage durch einen Anwender eine Anzeige auf der Anzeigeeinrichtung darzustellen. Die Anzeige kann durch Softwarecode generiert und in einem speziellen Menüpunkt einer Anwenderschnittstelle angeordnet werden. Sie enthält eine stilisierte Darstellung von Körperregionen eines Anwenders, welche auch als Regionen einer Sitzgelegenheit des Fortbewegungsmittels ausgestaltet sein können. Erfindungswesentlich ist hierbei lediglich, dass der Anwender mindestens zwei unterschiedliche, seinem Körper zugehörige Klimaeinstellungen in stilisierter Darstellung wiederfindet. Selbstverständlich können mehr als zwei Körperregionen repräsentiert werden. Zusätzlich ist zumindest ein Sinnbild für einen Luftauslass der Klimaanlage in der Anzeige vorgesehen. Der Luftauslass repräsentiert eine Quelle für zur Anpassung der Raumtemperatur vorgesehene Wärme. Die Anzeigeeinheit ist weiter eingerichtet, eine Anwendereingabe entgegen zu nehmen, welche beispielsweise eine Geste vor oder auf einer Oberfläche der Anzeigeeinrichtung umfassen kann. Zusätzlich zur Datenverarbeitungseinheit und zur berührungssensitiven Anzeigeeinrichtung umfasst die Benutzerschnittstelle eine Annäherungssensorik. Die Annäherungssensorik ist eingerichtet, bereits eine Annäherung eines Eingabemittels des Anwenders (z.B. ein Finger, eine Hand, ein Stylus, o.ä.) zu erkennen, ohne dass dieses die Anzeigeeinrichtung bereits berührt hat. Im Ansprechen auf das Erkennen wird der Anwender über die Möglichkeit einer berührungsbasierten Eingabe zwischen dem Sinnbild für einen Luftauslass der Klimaanlage und der stilisierten Darstellung von Körperregionen durch einen Hinweis informiert. Der Hinweis kann beispielsweise durch eine Hervorhebung/Einblendung in der Scheibe und/oder durch eine akustische Ausgabe erfolgen. Auf diese Weise wird der Anwender dazu angeregt, die auf der Anzeigeeinrichtung dargestellte Anzeige zur Eingabe von Steuerbefehlen für die Klimaanlage zu verwenden. Beispielsweise kann der Hinweis ein Einblenden eines Pfeils umfassen, welcher insbesondere seinen Ursprung im Bereich des Sinnbildes für den Luftauslass hat. Auf diese Weise wird dem Anwender mit dem Hinweis auch die aktuelle Einstellung der Luftstromstärke mitgeteilt. Der Pfeil ermöglicht dabei durch seine Richtung die Zuordnung der Körperregion, während seine Länge die Luftstromstärke repräsentiert. Zusätzlich oder alternativ kann der Hinweis einen Anfasser umfassen, welcher insbesondere im Bereich des Sinnbildes für den Luftauslass dargestellt wird. Im Bereich graphischer Anwenderschnittstellen (graphical user interface, GUI) haben sich mehrere Punkte (z.B. übereinander oder nebeneinander dargestellt) hierfür durchgesetzt, welche eine "rutschsichere" Bedieneinheit darstellen sollen. Die Darstellung eines solchen Anfassers ermöglicht dabei einen Hinweis für die erfindungsgemäße Steuerung der Klimaanlage, insbesondere für den Fall, dass für (zumindest) eine Körperregion derzeit kein Luftstrom eingestellt ist ("Lüfterstufe 0"). Selbstverständlich kann der Anfasser auch im Bereich eines Pfeils, insbesondere auf der Pfeilspitze eines bereits dargestellten Pfeils, angeordnet werden, um dessen Veränderung mittels Touch-Geste anzuregen.

Die Datenverarbeitungseinheit ist eingerichtet, in Abhängigkeit einer charakteristischen Position der Eingabe in einem Bereich zwischen dem Sinnbild für den Luftauslass und der Darstellung von Körperregionen sowohl eine Stärke eines Luftstromes als auch eine Körperregion des Anwenders auszuwählen, auf welche der Luftstrom vornehmlich einwirken soll. Hierzu weisen das Sinnbild für den Luftauslass und die Darstellung von Körperregionen einen gewissen Mindestabstand auf, welcher eine differenzierte Anwendereingabe zwischen beiden ermöglicht. Das Sinnbild für den Luftauslass in Verbindung mit der Darstellung von Körperregionen stellt dabei eine äußerst intuitiv durch den Anwender interpretierbare und daher effizient bedienbare Möglichkeit dar, die gewünschte Einstellung der Klimaanlage vorzunehmen.

Die Unteransprüche zeigen bevorzugte Weiterbildungen der Erfindung.

Bevorzugt wird die Eingabe einer dargestellten Körperregion zugeordnet, welche sich auf einer Geraden durch das Sinnbild für den Luftauslass und die charakteristische Position befindet. Die Anwendereingabe wird hierbei hinsichtlich mindestens zweier Dimensionen ausgewertet. Einerseits wird die Entfernung der charakteristischen Position (z.B. die Position einer Tipp-Geste, die Endposition einer Wisch-Geste o.ä.) hinsichtlich ihrer Entfernung von dem Sinnbild für den Luftauslass und/oder hinsichtlich ihrer Entfernung zu einer jeweiligen Körperregion ausgewertet. Je näher die Eingabe bzw. die charakteristische Position einer jeweiligen Körperregion ist, desto stärker wird der Luftstrom eingestellt.

Alternativ kann die ausgewählte Körperregion beispielsweise ermittelt werden, indem ein Abstand der charakteristischen Eingabe von einem zwischen dem Sinnbild und einer jeweiligen Körperregion aufgespannten Flächenbereich festgestellt wird, und sich die Eingabe in umgekehrt proportionalem Maße zum Abstand auf eine jeweilige Körperregion bezieht. Alternativ kann auch lediglich eine einzige Körperregion (diejenige mit dem geringsten Abstand) ausgewählt oder zwei Körperregionen (die beiden mit den geringsten Abständen) als Ziel der Eingabe ermittelt werden. Alternativ können solche Körperregionen als Ziel der Eingabe verstanden werden, bei welchen die charakteristische Position der Eingabe einen maximalen vordefinierten Abstand zu einer linearen Verbindung zwischen dem Sinnbild und der Darstellung der betreffenden Körperregionen oder einer zwischen beiden aufgespannten Fläche unterschreitet. Auf diese Weise wird eine intuitive Bedienung mehrerer Parameter durch eine einzige Geste möglich.

Die Eingabe kann beispielsweise eine punktförmige Eingabe (Tipp-Geste) sein, während eine wiederholte punktförmige Eingabe eine Stärke des Luftstromes stufenweise erhöht oder erniedrigt. Beispielsweise kann eine jede punktförmige Eingabe die Stärke des Luftstroms um eine vordefinierte Stufe erhöhten, bis eine maximale Stärke des Luftstroms erreicht ist. Wird anschließend weiterhin wiederholt eine punktförmige Eingabe vorgenommen, verringert sich die Stärke des Luftstromes entsprechend der Anzahl der Eingaben um eine entsprechende Anzahl vordefinierter Stufen.

Alternativ oder zusätzlich können Wisch-Gesten zur Steuerung der erfindungsgemäßen Benutzerschnittstelle erkannt werden, wobei die charakteristische Position der Eingabe einem Endpunkt der Wisch-Geste entspricht. Mit anderen Worten wird unabhängig vom Verlauf bzw. von der Gestalt der Wisch-Geste die Position eines letzten Berührpunktes eines Eingabemittels des Anwenders als charakteristische Position interpretiert und zur Steuerung der Klimaanlage ausgewertet. Während des Andauerns der Wisch-Geste können aktuelle Punkte als charakteristische Positionen ausgewertet und zur Steuerung der Klimaanlage verwendet werden. Auf diese Weise kann der Anwender laufend überprüfen, ob die aktuelle charakteristische Position seine Wunscheinstellung verwirklicht.

Bevorzugt ist die Anzeigeeinheit weiter eingerichtet, einen Pfeil zwischen dem Sinnbild für den Luftauslass und der charakteristischen Position der Eingabe darzustellen. Der Pfeil stellt dabei eine optische Rückmeldung für den Anwender dar, welche charakteristische Position für die derzeitige Einstellung verwendet worden ist. Zusätzlich können weitere Pfeile die Luftstromstärke aktuell nicht bedienter Körperregionen visualisieren. Dies verbessert das Anwendererlebnis bei der Bedienung der erfindungsgemäßen Benutzerschnittstelle.

Bevorzugt kann die Datenverarbeitungseinrichtung eine maximale Luftstromstärke einstellen, wenn die charakteristische Position der aktuellen Eingabe mit einer Darstellung einer Körperregion zusammenfällt. Mit anderen Worten führt eine Eingabe auf die Darstellung einer jeweiligen Körperregion zu einer automatischen Einstellung eines maximalen Luftstroms auf diese Körperregion.

Weiter bevorzugt kann die Datenverarbeitungseinheit weiter eingerichtet sein, eine aktuell eingestellte Luftstromstärke für den Anwender durch die Anzeige einer zugeordneten Ziffer erkennbar zu machen. Die Ziffer kann beispielsweise an oder auf einem dargestellten Pfeil und/oder auf der jeweiligen dargestellten Körperregion angeordnet sein. Auf diese Weise ist die aktuelle Einstellung für den Anwender in einfacher Weise quantitativ erfassbar.

Sofern die Klimaanlage eine separate Einstellung für Fahrer- und Beifahrerseite unterstützt, können die vorgenannten Darstellungen für eine jede Fahrzeugseite separat angezeigt werden. Solche Anzeigen werden auch als "Split-Screen" bezeichnet und können abwechselnd oder zeitgleich (sofern durch die verwendete Eingabeeinrichtung zeitgleiche Mehrfachbedienung unterstützt) bedient werden.

Um auch Einfluss auf die Temperatur des gesteuerten Luftstroms nehmen zu können, kann die Datenverarbeitungseinrichtung weiter eingerichtet sein, im Ansprechen auf ein Anwählen einer dargestellten Körperregion ein zugehöriges Bedienelement zur Veränderung einer Lufttemperatur darzustellen. Das zugehörige Bedienelement kann beispielsweise im Bereich der dargestellten Körperregion der Anzeige überlagert werden und/oder nach einer vordefinierten Zeitdauer ohne Anwendereingabe automatisch wieder ausgeblendet werden. Auch kann vorgesehen sein, dass eine erste Eingabe auf der berührungssensitiven Anzeigeeinrichtung zunächst nur das Bedienelement zur Veränderung der Lufttemperatur einblendet und erst in einem nachfolgenden Bedienschritt die vorstehend genannten Einstellungen des Luftstromes vorgenommen werden können. Sofern die Anzeigeeinrichtung eine zeitgleiche Mehrfachbedienung (Multi-Touch) unterstützt, kann der Anwender mit einem Finger die Lufttemperatur und mit einem anderen Finger die Stärke des Luftstroms sowie die Körperregion auswählen. Auf diese Weise wird eine umfassende Einstellung bzw. Steuerung in intuitiver und effizienter Weise ermöglicht.

Alternativ oder zusätzlich kann die Datenverarbeitungseinrichtung weiter eingerichtet sein, im Ansprechen auf das Auswählen der Stärke des Luftstromes ein zugehöriges Bedienelement zur Veränderung einer Lufttemperatur darzustellen. Während oder nach der Eingabe kann der Anwender auf diese Weise die Temperatur des in seiner Stärke angepassten Luftstromes anpassen. Die Möglichkeiten einer Multi-Touch-Bedienung (sofern unterstützt) bleiben durch diese Reihenfolge unberührt.

Gemäß einem dritten Aspekt der vorliegenden Erfindung wird ein Fahrzeug mit einer Benutzerschnittstelle zur Steuerung einer Klimaanlage vorgeschlagen, wie sie in Verbindung mit den beiden vorgenannten Erfindungsaspekten im Detail beschrieben worden sind. Auch für das Fahrzeug ergeben sich die Merkmale, Merkmalskombinationen sowie die sich aus diesen ergebenden Vorteile entsprechend den obigen Ausführungen, so dass zur Vermeidung von Wiederholungen auf diese verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
Figur 1 eine schematische Ansicht eines erfindungsgemäß mit einer Benutzerschnittstelle zur Steuerung einer Klimaanlage ausgestatteten Fahrzeugs;
Figur 2 eine Detailansicht eines ersten Ausführungsbeispiels einer erfindungsgemäßen Benutzerschnittstelle;
Figur 3 eine Detailansicht einer möglichen Anzeige zur Realisierung einer erfindungsgemäßen Benutzerschnittstelle;
Figur 4 eine Detailansicht eines Bedienschrittes eines Ausführungsbeispiels einer erfindungsgemäßen Benutzerschnittstelle;
Figur 5 eine Detailansicht eines alternativen Bedienschrittes eines Ausführungsbeispiels einer erfindungsgemäßen Benutzerschnittstelle;
Figur 6 eine schematische Detailansicht einer möglichen Realisierung stufenweise bedienbarer Pfeile; und
Figur 7 eine Detailansicht eines alternativen Ausführungsbeispiels eines Bedienschrittes einer erfindungsgemäßen Benutzerschnittstelle.

### Ausführungsformen der Erfindung

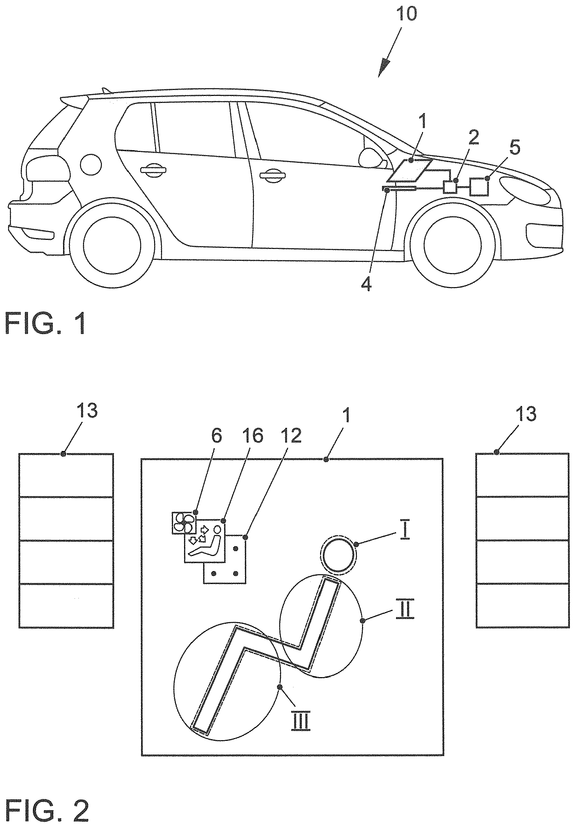

Figur 1 zeigt einen Pkw 10 als Fahrzeug, in welchem ein Display 1 als Anzeigeeinrichtung mit einem Prozessor 2 als Datenverarbeitungseinheit und einem LED-Array 4 als Annäherungssensorik informationstechnisch wirkverbunden ist. Zusätzlich ist eine Klimaanlage 5 an den Prozessor 2 angeschlossen, so dass die durch einen (nicht dargestellten) Anwender gegebenen Steuerbefehle zur Einstellung der Klimaanlage 5 verwendet werden können.

Figur 2 zeigt eine Ansicht auf ein Ausführungsbeispiel einer erfindungsgemäß ausgestalteten Benutzerschnittstelle. Links und rechts eines Displays 1 sind Tasten 13 zur Bedienung auf dem Display 1 dargestellter Inhalte angeordnet. Das Display 1 selbst ist als berührungssensitives Display ("Touch Screen") ausgestaltet. Links oben ist ein Ventilatorsymbol 6 als Sinnbild für einen Luftauslass der Klimaanlage dargestellt. Weiter umfasst die Anzeige eine stilisierte Darstellung von Körperregionen I, II, III eines Anwenders in Form eines Strichmännchens. Der Kopf I des Strichmännchens stellt eine erste Körperregion, der Rumpf II eine zweite Körperregion und die Beine III eine dritte Körperregion dar. Im Bereich des Ventilatorsymbols 6 ist ein Piktogramm 16 dargestellt, welches eine Miniaturansicht der Körperregionen sowie auf diese gerichtete Pfeile umfasst. Im Ansprechen auf eine erkannte Annäherung einer Hand eines Anwenders wurde ein Anfasser 12 als Hinweis eingeblendet, welcher den Anwender darüber informiert, dass eine berührungsbasierte Interaktion mit der Darstellung vorgesehen ist.

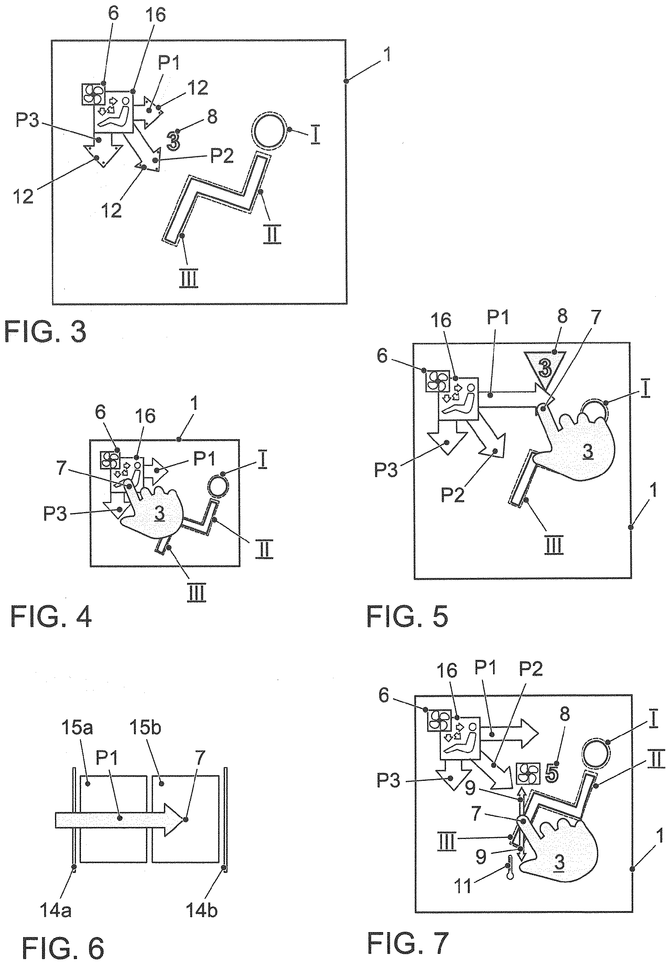

Figur 3 zeigt die in Figur 2 dargestellte Anzeige auf dem Display 1, während jedoch der Anfasser 12 durch Pfeile P1, P2, P3 und eine dem Pfeil P2 zugeordnete Ziffer 8 ersetzt wurde. Die Pfeile P1, P2, P3 veranschaulichen aktuell eingestellte Stärken des Luftstromes. Die dargestellte Ziffer 8 (im Beispiel Lüfterstufe "3") veranschaulicht die Stärke des auf die Beine III des Anwenders gerichteten Luftstroms. In der dargestellten Anzeige weisen die Spitzen der Pfeile P1, P2, P3 ihrerseits drei Punkte als Anfasser 12 auf, welche die Möglichkeit einer berührungsbasierten Interaktion veranschaulichen.

Figur 4 zeigt einen ersten Bedienschritt, welchen der Anwender auf Basis der in Figur 3 dargestellten Anzeige vornehmen kann. Hierzu tippt der Anwender mit seiner Hand 3 auf das Piktogramm 16 und weist diesem somit die charakteristische Position 7 (dargestellt durch einen Punkt auf der Spitze des Zeigefingers) zu.

Figur 5 zeigt eine mögliche, sich an die in Figur 4 dargestellte Situation anschließende Geste des Anwenders. Die Hand 3 des Anwenders hat eine horizontale, auf den Kopf I gerichtete Wischgeste ausgeführt, indem er die Hand 3 unter Kontakt mit der Anzeigeeinrichtung 1 im Bild nach rechts verschoben hat. Die charakteristische Position 7 korrespondiert aktuell mit der Lüfterstufe 3, welche in Form einer Ziffer 8 innerhalb eines Dreiecks im Bereich der Pfeilspitze des Pfeils P1 angezeigt wird. Hebt der Anwender die Hand 3 in der dargestellten Position von der Oberfläche der Anzeigeeinrichtung 1 ab, bleibt die dargestellte Lüftereinstellung bis auf weiteres bestehen.

Figur 6 veranschaulicht die Möglichkeit, sichtbare Raster zur Verdeutlichung der Abstufungen der Luftstromstärken darzustellen. Im Beispiel ist der Pfeil P1 zunächst so dargestellt, dass seine Spitze mit der charakteristischen Position 7 einer Anwendereingabe zusammenfällt. Da jedoch die charakteristische Position 7 in einem aktivierten Springfenster 15b angeordnet ist, springt die Spitze des Pfeils automatisch auf das nächstgrößere Raster 14b, um einer vordefinierten Lüfterstufe zu entsprechen. Würde (in einem nicht dargestellten Fall) die charakteristische Position 7 innerhalb des Springfensters 15a liegen, würde der Pfeil P1 derart verkürzt werden, dass seine Spitze zur Veranschaulichung der nächstkleineren Lüfterstufe auf dem Raster 14a angeordnet wird. Auf diese Weise lassen sich durch kontinuierliche Anwendereingaben diskrete, vordefinierte Luftstromstärken einstellen.

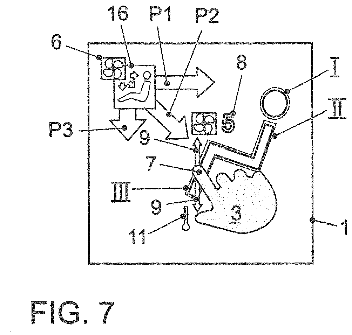

Figur 7 zeigt einen Bedienschritt eines alternativen Ausführungsbeispiels, wobei die Anzeige im Wesentlichen auf der in Figur 3 dargestellten Anzeige basiert. Durch Tippen auf die Beine II hat der Anwender die Stärke des Luftstromes in Richtung der Beine auf eine maximale Stärke eingestellt, wie dies durch die Ziffer 8 (im Beispiel Lüfterstufe "5") veranschaulicht wird. Im Ansprechen auf die vorgenommene Einstellung wird ein zur Einstellung der Lufttemperatur zugehöriges Bedienelement in Form eines vertikal orientierten Doppelpfeils 9 eingeblendet. Zusätzlich ist ein Thermometer 7 als Sinnbild für die Einstellbarkeit einer Lufttemperatur eingeblendet worden. Die Einstellung der Lufttemperatur kann im Beispiel durch eine dem Doppelpfeil 9 entsprechende Wisch-Geste vorgenommen werden, wobei eine aktuell eingestellte Lufttemperatur beispielsweise durch blaue oder rote Einfärbung des Doppelpfeils 9 und/oder des Thermometers 11 erfolgen kann. Wischt der Anwender aufwärts, färbt sich der Doppelpfeil 9 und/oder das Thermometer 11 rot, wischt der Anwender abwärts, färbt sich der Doppelpfeil 9 und/oder das Thermometer 11 blau. Inwiefern die Anwendereingabe einer Einstellung der Stärke des Luftstroms oder einer Einstellung der Lufttemperatur zuzuordnen ist, kann also beispielsweise durch Auswertung einer Richtung einer aktuellen Wisch-Geste und/oder durch Eingabe in vordefinierter Reihenfolge erfolgen. Alternativ oder zusätzlich ist es möglich, zum Wechseln zwischen einer Einstellung der Temperatur auf eine Einstellung der Luftstromstärke (oder anders herum) ein zwischenzeitliches Abheben des Fingers bzw. der Hand 3 vom Display 1 zu verlangen. Selbstverständlich kann zusätzlich eine der aktuell gewählten Temperatur entsprechende Anzeige in Form eines Zahlenwertes in Grad (Celsius oder Fahrenheit) als Anwenderinformation auf dem Display 1 dargestellt werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Display
- 2: Prozessor
- 3: Hand
- 4: LED-Array
- 5: Klimaanlage
- 6: Ventilatorsymbol
- 7: Charakteristische Position
- 8: Ziffer
- 9: Doppelpfeil
- 10: Pkw
- 11: Thermometer
- 12: Anfasser
- 13: Taste
- 14a, 14b: Raster
- 15a: Springfenster
- 15b: Aktiviertes Springfenster
- 16: Piktogramm
- I: Kopf
- II: Rumpf
- III: Beine
- P1, P2, P3: Pfeile

## Patentansprüche

1. Benutzerschnittstelle zur Steuerung einer Klimaanlage (5) eines Fortbewegungsmittels (10) umfassend
- eine berührungssensitive Anzeigeeinrichtung (1), und
- eine Datenverarbeitungseinheit (2), wobei die Datenverarbeitungseinheit (2) eingerichtet ist, zur Steuerung der Klimaanlage (5) durch einen Anwender eine Anzeige auf der Anzeigeeinrichtung (1) darzustellen, welche
- eine stilisierte Darstellung von Körperregionen (I, II, III) eines Anwenders und
- ein Sinnbild (6) für einen Luftauslass der Klimaanlage (5) enthält,
**gekennzeichnet durch**
- eine Annäherungssensorik (4), welche eingerichtet ist, eine Annäherung eines Eingabemittels (3) des Anwenders zu erkennen, und im Ansprechen darauf
- einen Anwender über die Möglichkeit einer berührungsbasierten Eingabe zwischen dem Sinnbild (6) für einen Luftauslass der Klimaanlage (5) und der stilisierten Darstellung von Körperregionen (I, II, III) durch einen Hinweis zu informieren.

2. Benutzerschnittstelle nach Anspruch 1, wobei der Hinweis ein Einblenden eines Pfeils (P1, P2, P3) umfasst, welcher insbesondere seinen Ursprung im Bereich des Sinnbildes (6) für den Luftauslass hat.

3. Benutzerschnittstelle nach einem der Ansprüche 1 oder 2, wobei der Hinweis einen Anfasser (12) umfasst, welcher insbesondere im Bereich des Sinnbildes (6) für den Luftauslass dargestellt wird.

4. Benutzerschnittstelle nach einem der vorstehenden Ansprüche weiter umfassend
- eine berührungssensitive Anzeigeeinrichtung (1), und
- eine Datenverarbeitungseinheit (2), wobei die Datenverarbeitungseinheit (2) eingerichtet ist, zur Steuerung der Klimaanlage (5) durch einen Anwender eine Anzeige auf der Anzeigeeinrichtung (1) darzustellen, welche
- eine stilisierte Darstellung von Körperregionen (I, II, III) eines Anwenders und
- ein Sinnbild (6) für einen Luftauslass der Klimaanlage (5) enthält, und wobei die Anzeigeeinrichtung (1) eingerichtet ist, eine Anwendereingabe entgegenzunehmen, und die Datenverarbeitungseinrichtung (2) eingerichtet ist, in Abhängigkeit einer charakteristischen Position (7) der Eingabe in einem Bereich zwischen dem Sinnbild (6) für den Luftauslass und der Darstellung von Körperregionen (I, II, III) sowohl eine Stärke eines Luftstromes als auch eine Körperregion (I, II, III) des Anwenders auszuwählen, auf welche dieser vornehmlich einwirken soll.

5. Benutzerschnittstelle nach einem der vorstehenden Ansprüche, wobei die Eingabe einer dargestellten Körperregion (I, II, III) zugeordnet wird, welche sich auf einer durch das Sinnbild (6) für den Luftauslass und die charakteristische Position (7) definierten Gerade befindet.

6. Benutzerschnittstelle nach einem der vorstehenden Ansprüche, wobei die Eingabe
- eine punktförmige Eingabe ist, und eine wiederholte punktförmige Eingabe eine Stärke des Luftstromes stufenweise erhöht oder erniedrigt, oder
- eine Wisch-Geste ist, wobei die charakteristische Position (7) der Eingabe einem Endpunkt der Wisch-Geste entspricht.

7. Benutzerschnittstelle nach einem der vorstehenden Ansprüche, wobei die Anzeigeeinheit (1) eingerichtet ist, einen Pfeil (P1, P2, P3) zwischen dem Sinnbild (6) für den Luftauslass und der charakteristischen Position (7) der Eingabe darzustellen.

8. Benutzerschnittstelle nach einem der vorstehenden Ansprüche, wobei die Datenverarbeitungseinrichtung (2) weiter eingerichtet ist, eine maximale Luftstromstärke einzustellen, sofern die charakteristische Position (7) der Eingabe mit einer Darstellung einer Körperregion (I, II, III) zusammenfällt.

9. Benutzerschnittstelle nach einem der vorstehenden Ansprüche, wobei die Datenverarbeitungseinrichtung (2) weiter eingerichtet ist, eine aktuelle Luftstromstärke in Form einer zugeordneten Ziffer (8) zwischen der Darstellung von Körperregionen (I, II, III) und dem Sinnbild (6) für den Luftauslass darzustellen.

10. Benutzerschnittstelle nach einem der vorstehenden Ansprüche, wobei die Datenverarbeitungseinrichtung (2) weiter eingerichtet ist, zur separaten Anzeige bzw. Steuerung der Klimaanlage (5) für einen Fahrer und einen Beifahrer
- eine erste und eine zweite stilisierte Darstellung von Körperregionen (I, II, III) eines Anwenders und
- ein erstes und ein zweites Sinnbild (6) für einen ersten und zweiten Luftauslass der Klimaanlage
in einem jeweiligen Teilbereich auf der Anzeigeeinrichtung (1) darzustellen.

11. Benutzerschnittstelle nach einem der vorstehenden Ansprüche, wobei die Datenverarbeitungseinrichtung (2) weiter eingerichtet ist, im Ansprechen auf ein Anwählen einer dargestellten Körperregion (I, II, III) ein zugehöriges Bedienelement (9) zur Veränderung einer Lufttemperatur darzustellen.

12. Benutzerschnittstelle nach einem der vorstehenden Ansprüche, wobei die Datenverarbeitungseinrichtung (2) weiter eingerichtet ist, im Ansprechen auf das Auswählen der Stärke des Luftstromes ein zugehöriges Bedienelement (9) zur Veränderung einer Lufttemperatur darzustellen.

13. Fahrzeug umfassend eine Benutzerschnittstelle nach einem der vorstehenden Ansprüche.

## Claims

1. User interface for controlling an air-conditioning installation (5) of a means of locomotion (10), comprising
- a touch-sensitive display device (1) and
- a data processing unit (2), wherein the data processing unit (2) is set up to depict a display on the display device (1) for control of the air-conditioning installation (5) by a user, which display
- includes a stylized depiction of body regions (I, II, III) of a user and
- a symbol (6) for an air outlet of the air-conditioning installation (5),
**characterized by**
- a proximity sensor system (4) that is set up to detect an approach by an input means (3) of the user, and, in response thereto,
- to inform a user about the possibility of a touch-based input between the symbol (6) for an air outlet of the air-conditioning installation (5) and the stylized depiction of body regions (I, II, III) by means of an indication.

2. User interface according to Claim 1, wherein the indication comprises showing an arrow (P1, P2, P3) that, in particular, has its origin in the area of the symbol (6) for the air outlet.

3. User interface according to either of Claims 1 and 2, wherein the indication comprises a drag handle (12) that, in particular, is depicted in the area of the symbol (6) for the air outlet.

4. User interface according to one of the preceding claims, further comprising
- a touch-sensitive display device (1) and
- a data processing unit (2), wherein the data processing unit (2) is set up to depict a display on the display device (1) for control of the air-conditioning installation (5) by a user, which display
- includes a stylized depiction of body regions (I, II, III) of a user and
- a symbol (6) for an air outlet of the air-conditioning installation (5), and wherein the display device (1) is set up to accept a user input, and the data processing device (2) is set up to take a characteristic position (7) of the input in an area between the symbol (6) for the air outlet and the depiction of body regions (I, II, III) as a basis for selecting both a strength of an air stream and a body region (I, II, III) of the user on which said air stream is mainly intended to act.

5. User interface according to one of the preceding claims, wherein the input is assigned to a depicted body region (I, II, III) that is on a straight line defined by the symbol (6) for the air outlet and the characteristic position (7).

6. User interface according to one of the preceding claims, wherein the input
- is a punctiform input, and a repeated punctiform input increases or reduces a strength of the air stream gradually, or
- is a swipe gesture, wherein the characteristic position (7) of the input corresponds to an end of the swipe gesture.

7. User interface according to one of the preceding claims, wherein the display unit (1) is set up to depict an arrow (P1, P2, P3) between the symbol (6) for the air outlet and the characteristic position (7) of the input.

8. User interface according to one of the preceding claims, wherein the data processing device (2) is further set up to set a maximum air stream strength if the characteristic position (7) of the input coincides with a depiction of a body region (I, II, III).

9. User interface according to one of the preceding claims, wherein the data processing device (2) is further set up to depict a present air stream strength in the form of an assigned numeral (8) between the depiction of body regions (I, II, III) and the symbol (6) for the air outlet.

10. User interface according to one of the preceding claims, wherein the data processing device (2) is further set up to depict
- a first and a second stylized depiction of body regions (I, II, III) of a user and
- a first and a second symbol (6) for a first and a second air outlet of the air-conditioning installation
in a respective subarea on the display device (1) for separate display or control of the air-conditioning installation (5) for a driver and a front-seat passenger.

11. User interface according to one of the preceding claims, wherein the data processing device (2) is further set up to respond to a selection of a depicted body region (I, II, III) by depicting an associated operator control element (9) for changing an air temperature.

12. User interface according to one of the preceding claims, wherein the data processing device (2) is further set up to respond to the selection of the strength of the air stream by depicting an associated operator control element (9) for changing an air temperature.

13. Vehicle comprising a user interface according to one of the preceding claims.

## Revendications

1. Interface utilisateur destinée à commander un équipement de climatisation (5) d'un moyen de transport (10), comprenant
- un dispositif d'affichage (1) sensible au toucher, et
- une unité de traitement de données (2), l'unité de traitement de données (2) étant conçue pour, en vue de la commande de l'équipement de climatisation (5) par un utilisateur, représenter une indication sur le dispositif d'affichage (1), laquelle
- contient une représentation stylisée de régions du corps (I, II, III) d'un utilisateur et
- un symbole (6) pour une sortie d'air de l'équipement de climatisation (5),
**caractérisée par**
- un système de détection d'approche (4) qui est conçu pour reconnaître une approche d'un moyen de saisie (3) de l'utilisateur et, en réaction à cela,
- informer un utilisateur par une notification à propos de la possibilité d'une saisie par contact entre le symbole (6) pour une sortie d'air de l'équipement de climatisation (5) et la représentation stylisée de régions du corps (I, II, III).

2. Interface utilisateur selon la revendication 1, la notification comportant l'affichage en superposition d'une flèche (P1, P2, P3) qui a notamment son origine dans la zone du symbole (6) pour la sortie d'air.

3. Interface utilisateur selon l'une des revendications 1 ou 2, la notification comprenant un élément de prise (12) qui est notamment représenté dans la zone du symbole (6) pour la sortie d'air.

4. Interface utilisateur selon l'une des revendications précédentes, comprenant en outre
- un dispositif d'affichage (1) sensible au toucher, et
- une unité de traitement de données (2), l'unité de traitement de données (2) étant conçue pour, en vue de la commande de l'équipement de climatisation (5) par un utilisateur, représenter une indication sur le dispositif d'affichage (1), laquelle
- contient une représentation stylisée de régions du corps (I, II, III) d'un utilisateur et
- un symbole (6) pour une sortie d'air de l'équipement de climatisation (5), et le dispositif d'affichage (1) étant conçu pour accepter une saisie d'utilisateur et l'unité de traitement de données (2) conçue pour, en fonction d'une position caractéristique (7) de la saisie dans une zone entre le symbole (6) pour une sortie d'air et la représentation de régions du corps (I, II, III), sélectionner à la fois une intensité d'un courant d'air et une région du corps (I, II, III) sur laquelle celui-ci doit agir en priorité.

5. Interface utilisateur selon l'une des revendications précédentes, une région du corps (I, II, III) représentée étant associée à la saisie, laquelle se trouve sur une droite définie par le symbole (6) pour la sortie d'air et la position caractéristique (7).

6. Interface utilisateur selon l'une des revendications précédentes, la saisie
- étant une saisie ponctuelle et une saisie ponctuelle répétée augmentant ou diminuant graduellement l'intensité du courant d'air, ou
- étant un geste d'essuyage, la position caractéristique (7) de la saisie correspondant à un point final du geste d'essuyage.

7. Interface utilisateur selon l'une des revendications précédentes, l'unité d'affichage (1) étant conçue pour représenter une flèche (P1, P2, P3) entre le symbole (6) pour la sortie d'air et la position caractéristique (7) de la saisie.

8. Interface utilisateur selon l'une des revendications précédentes, l'unité de traitement de données (2) étant en outre conçue pour régler une intensité de courant d'air maximale dans la mesure où la position caractéristique (7) de la saisie coïncide avec une représentation d'une région du corps (I, II, III).

9. Interface utilisateur selon l'une des revendications précédentes, l'unité de traitement de données (2) étant en outre conçue pour représenter une intensité de courant d'air actuelle sous la forme d'un chiffre (8) associé entre la représentation des régions du corps (I, II, III) et le symbole (6) pour la sortie d'air.

10. Interface utilisateur selon l'une des revendications précédentes, l'unité de traitement de données (2) étant en outre conçue pour, en vue d'un affichage ou d'une commande séparé de l'équipement de climatisation (5), représenter
- une première et une deuxième représentation stylisée de régions du corps (I, II, III) d'un utilisateur et
- un premier et un deuxième symbole (6) pour une sortie d'air de l'équipement de climatisation pour un conducteur et un passager dans une zone partielle respective sur le dispositif d'affichage (1).

11. Interface utilisateur selon l'une des revendications précédentes, l'unité de traitement de données (2) étant en outre conçue pour, en réaction à une sélection d'une région du corps (I, II, III) représentée, représenter un élément de commande (9) associé servant à la modification d'une température de l'air.

12. Interface utilisateur selon l'une des revendications précédentes, l'unité de traitement de données (2) étant en outre conçue pour, en réaction à la sélection de l'intensité du courant d'air, représenter un élément de commande (9) associé servant à la modification d'une température de l'air.

13. Véhicule comprenant une interface utilisateur selon l'une des revendications précédentes.
